# DEMANDE DE BREVET EUROPEEN

(11) **EP 2 450 328 A1**
(43) Date de publication de la demande: **09.05.2012**
(21) Numéro de dépôt: 11187916.9
(22) Date de dépôt: 04.11.2011
(51) Int. Cl.: C04B 41/52, E01C 7/00, E04B 1/00, E04F 15/00

(54) **Procédé de réalisation d'un revêtement sur une surface de type céramique ou faïence multi-couches à base de béton**

(30) Priorité: 05.11.2010 FR 1059151
(71) Demandeur: Palazzolo, Rocco, 75003 Paris (FR); Mejladi, Moktar, 45120 Cepoy (FR)
(72) Inventeur: Palazzolo, Rocco, 75003 Paris (FR); Mejladi, Moktar, 45120 Cepoy (FR)
(74) Mandataire: Esselin, Sophie

(57) **Abrégé**

L'invention concerne un procédé de réalisation d'un revêtement de décoration sur une surface en composé minéral pouvant être de type céramique ou faïence, caractérisé en ce qu'il comprend au moins les étapes suivantes :
- le dépôt d'une couche de primaire d'adhérence sur ladite surface en composé minéral ;
- le dépôt d'une couche de béton ;
- le durcissement de ladite couche de béton ;
- le dépôt d'une couche de décoration.

Avantageusement le béton peut être un béton auto-nivelant.

## Description

Le domaine de l'invention est celui des revêtements de surface et notamment de surfaces exposées à des contraintes de tout type, par exemple de type charge pondérale (pour un sol) ou bien encore de type échauffement important (pour un plan de travail de cuisine) ou bien encore de type agression par des produits acides de nettoyage.

Il existe à ce jour de nombreuses classes de revêtements de surfaces très résistants mais ces revêtements nécessitent généralement une logistique assez lourde et lorsqu'il convient d'en changer pour cause de dégradation ou cause de changement de décoration, cette dernière opération s'avère également fastidieuse.

Ainsi aujourd'hui, lorsqu'un utilisateur cherche à changer un revêtement de décoration au sol ou au niveau de mur de cuisine ou salle de bain, par exemple de type carrelage, usuellement il procède au retrait de ce dernier et doit entreprendre des travaux assez lourds pour reposer un nouveau type de carrelage. Il en est de même lorsqu'un utilisateur souhaite changer un plan de travail de cuisine couplé au carrelage présent autour.

Alors que l'engouement du public pour des travaux de renouvellement de décoration ne cesse de croître, il convient de plus en plus de trouver des solutions facilitant ce type de travaux pour les utilisateurs et tout particulièrement pour les usagers amateurs et ce tout en cherchant à soigner l'esthétique de ces revêtements de renouvellement.

Il a déjà été proposé d'utiliser des revêtements purement synthétiques à base de peinture de décoration, comprenant des résines organiques de protection, néanmoins, de tels revêtements de décoration présentent un certain nombre d'inconvénients que propose de pallier la solution de la présente invention. En effet, une couche de peinture recouverte d'une simple couche de résine synthétique même épaisse, n'est pas satisfaisante lors de l'opération de recouvrement de surfaces présentant des inhomogénéités de surface importantes (voire un carrelage défaillant à recouvrir). Par ailleurs, lors du renouvellement de surface au sol conjuguée avec un chauffage au sol, les revêtements purement synthétiques n'offrent pas nécessaire une conduction thermique optimale.

C'est pourquoi dans ce contexte, l'objet de la présente invention concerne un procédé de réalisation d'un revêtement de décoration sur une surface en composé minéral pouvant être de type céramique ou faïence, caractérisé en ce qu'il comprend au moins les étapes suivantes :
- le dépôt d'une couche de primaire d'adhérence sur ladite surface en composé minéral ;
- le dépôt d'une couche de béton;
- le durcissement de ladite couche de béton ;
- le dépôt d'une couche de décoration.

Selon une variante le béton peut être un béton.

Selon une variante de l'invention, le procédé comprend en outre une étape de réalisation de motifs dans la couche de béton.

Selon une variante de l'invention, le procédé comprend l'application d'un moule permettant de réaliser lesdits motifs, avant l'étape de durcissement de ladite couche de béton.

Selon une variante de l'invention, le procédé comprend en outre l'application d'un agent démoulant sur la couche de béton avant durcissement, ledit agent pouvant être à base de sable.

Selon une variante de l'invention, lesdits motifs sont réalisés par application locale successive d'un moule, déplacé de proche en proche sur la totalité de la surface à traiter.

Selon une variante de l'invention, le procédé comprend en outre le dépôt d'une couche supérieure de résine de protection.

Selon une variante de l'invention, le dépôt de la couche de primaire d'adhérence est effectué avec un rouleau à peindre.

Selon une variante de l'invention, le dépôt de la couche de béton est réalisé avec un rouleau calandreur permettant de calibrer l'épaisseur de la couche de béton.

Selon une variante de l'invention, le dépôt de la couche comprenant de la chaux éteinte et des agrégats de composé de type marbre ou granite est effectué avec un rouleau.

Selon une variante de l'invention, le béton comprend un composé minéral de type granite, et au moins une résine synthétique minérale déshydratée.

Selon une variante de l'invention, la couche de décoration comprend une couche comprenant de la chaux éteinte et des agrégats de composé minéral pouvant être de type marbre ou granite.

Selon une variante de l'invention, la couche comprenant de la chaux éteinte et du marbre, comprend en outre des terres ou oxydes naturelles en poudre pour la mise en teinte.

Selon une variante de l'invention, la couche de décoration comprend une peinture bi-composant comportant au moins un premier composant de type prépolymère à base de bisphénol et d'épichlorhydrine et au moins un second composant de type polyamine.

Selon une variante de l'invention, la couche de décoration est une couche de peinture dite de patine comprenant une résine et de la chaux éteinte permettant d'obtenir des effets de couleurs vieillies.

Selon une variante de l'invention, le procédé comprend en outre le dépôt d'une couche intermédiaire dite d'imprégnateur à la surface de la couche comprenant de la chaux éteinte et du marbre de manière à figer la matière minérale, ladite couche d'imprégnateur étant à base de résine et de silicate.

Selon une variante de l'invention, la résine de protection est une résine microporeuse pouvant être de type polyuréthane.

Selon une variante de l'invention, la résine de protection est une résine bi-composant comportant au moins un premier composant de type prépolymère à base de bisphénol et d'épichlorhydrine et au moins un second composant de type polyamine.

Selon une variante de l'invention, la couche de primaire d'adhérence est de type résine acrylique.

L'invention sera mieux comprise grâce à la description qui va suivre donnée à titre non limitatif.

De manière générale, le revêtement de la présente invention peut être conçu et destiné à recouvrir des surfaces de tout type que l'on cherche à décorer ou pour lesquelles on cherche à changer la décoration, qu'il s'agisse de surface au sol type carrelage, sol aussi bien extérieur qu'intérieur. Le revêtement de l'invention peut également être adapté à des surfaces murales ou plan de travail de cuisine, ou bien encore des surfaces de type carrelage de salle de bain ou sanitaire, voire même des revêtements de meubles ou d'appareils type, appareil d'électroménager.

Quelle que soit la surface concernée, il convient dans un premier temps de procéder au dépôt d'une première couche de primaire d'adhérence destinée à supporter la couche de béton. Dans le cas de surface fortement dégradée localement et présentant des fissures profondes, on peut dans une étape préalable procéder à l'ouverture des fissures et utiliser une masse de réagréage.

Cette couche de primaire d'adhérence peut typiquement être une résine acrylique pouvant être appliquée au rouleau ou au pistolet.

On procède alors au dépôt de la couche de béton. De manière générale, l'appellation de béton concerne un mélange de ciment, de sable et d'eau. Le ciment joue le rôle de liant du béton hydraulique. Le ciment est composé d'un mélange en poudre de chaux et de calcaire argileux qui durcit avec l'eau pour faire du béton. On ajoute par ailleurs au ciment des éléments de gravier pour lui conférer sa résistance.

Avantageusement, le béton utilisé dans la présente invention peut comprendre un mélange de composé minéral à base de poudre de granite et d'au moins une résine synthétique minérale déshydratée.

Avantageusement, la résine peut être une résine minérale déshydratée de silicate.

La poudre de granite peut être en faible pourcentage, typiquement de l'ordre d'une dizaine de pourcentage.

Le béton est mélangé à de l'eau avant dépôt. L'eau permet via la résine minérale déshydratée de faire prendre en masse l'ensemble de la composition. Le dépôt est effectué avantageusement à l'aide d'un rouleau calandreur permettant d'assurer une homogénéité de surface et une épaisseur contrôlée. Un rouleau calandreur tel que celui ayant fait l'objet d'un dépôt de demande de brevet FR 2923402 par les demandeurs peut être particulièrement bien adapté, en raison de son filetage, pouvant être de type vis dont les dimensions du filetage permettent de régler l'épaisseur.

Lorsque l'on cherche à reconstituer à partir d'une surface composée de carreaux, de pavés ou autres motifs, un même rendu sans avoir à procéder de manière fastidieuse au retrait de ladite surface multi-éléments, on peut réaliser des motifs par application d'un moule à la surface dudit béton, lorsque le béton est encore frais et donc avant son durcissement. On peut notamment procéder de la façon décrite ci-après :
- on coule une chape dudit béton sur la couche de primaire d'adhérence et alors que le béton est encore frais ;
- on recouvre avantageusement le béton frais d'un agent démoulant pulvérulent, pouvant notamment être à base de sable.
- on applique successivement côte à côte les empreintes d'au moins deux moules identiques sur la surface dudit béton en exerçant une pression sur la face externe du moule et ;
- on démoule verticalement, en déplaçant de proche en proche ces moules de long de la surface de béton, jusqu'à ce qu'elle soit traitée dans sa totalité.

On obtient ainsi une surface unitaire présentant des motifs réalisés au niveau de la surface supérieure du béton.

Après un temps de durcissement, on procède au dépôt de la couche de décoration du revêtement.

Selon la variante qui suit, cette couche peut avantageusement être élaborée à partir d'un mélange de chaux éteinte, de marbre et de résine minérale déshydratée. Pour donner la couleur, l'ensemble ci-dessus est mélangé à sec avec des oxydes ou des terres. Typiquement cette composition peut comprendre environ 5% de poudre de marbre et environ 20 % de résine déshydratée.

Cet enduit correspond à un mortier décoratif de finition totalement minéral en poudre, la mise à la teinte se faisant avec des terres ou oxydes naturelles en poudre. Le mortier minéral est naturellement très résistant et ne nécessite pas l'usage d'une résine chimique.

Il présente des qualités exceptionnelles en terme de rendu permettant de reconstituer l'apparence de pierres naturelles identiques à l'aspect du marbre notamment, sur tout support et notamment pour des sols, murs, plans de travail et vasques, douches, terrasses extérieures...

Applicable en faible épaisseur, pouvant typiquement être comprise entre environ 3 mm à 6 mm, à l'aide du rouleau calandreur. Il permet une utilisation en rénovation sans travaux lourds. En décoration murale pure, il peut être appliqué en plus fine épaisseur.

Au besoin, on peut procéder à deux passes de dépôt de cette couche, en respectant une durée de séchage pouvant typiquement être de l'ordre de 24 heures.

Selon une autre variante de l'invention et ce afin de reconstituer l'aspect de couleurs vieillies, la couche de décoration peut être une couche de peinture comprenant de la chaux éteinte et de la résine.

La couche de décoration peut également être à base de peinture de l'art connu. Il peut s'agir d'une peinture bi-composant. Cette peinture bi-composant peut notamment comporter en outre des charges minérales de type dioxyde de titane et/ou de type mica et/ou de type sulfate de baryum et/ou de type talc et/ou de type silicate alcalin, permettant de renforcer ladite peinture, la rendant également résistante à des agressions acides dues à des produits classiques de nettoyage.

Avantageusement, la peinture bi-composant est une peinture à l'eau, permettant des effets de décoration similaires à ceux des peintures acryliques à l'eau.

Avant de procéder au dépôt de la résine de protection, on peut avantageusement, utiliser une couche intermédiaire dite d'imprégnateur, pouvant notamment être à base de résine et de silicate de manière à figer la matière minérale des couches inférieures.

On procède enfin avantageusement au dépôt d'une résine de protection et notamment dans le cas de revêtement de sol, de surfaces exposées à l'humidité (par exemple dans une salle de bain, des cabines de douche, des baignoires, etc...).

La résine peut être de type résine micro-poreuse à base de polyuréthane avec effet satiné brillante ou mat, l'intérêt de l'aspect micro-poreux étant qu'il permet l'évaporation de l'eau incorporée pour faire prendre les compositions à base de résine déshydratée.

Néanmoins, il est également possible d'utiliser des résines de type bi-composant, particulièrement résistantes aux chocs.

Ce type de résine de protection possède des propriétés particulières en termes de résistance. Ce type de résine est avantageusement translucide, voire même transparente permettant de laisser apparente la décoration réalisée préalablement. Elle peut avantageusement elle-même comprendre des inclusions renforçant les effets de décoration. Ces inclusions peuvent être de tout type : micro-objets de décoration pour éléments de salle de bain ou de sanitaire, inclusions pouvant être rendues lumineuses pour revêtement au sol par l'ajout de particules luminescentes ou phosphorescentes, .... Dans ce cas, la résine de protection comporte avantageusement une épaisseur plus élevée de l'ordre de 1000 microns.

## Revendications

1. Procédé de réalisation d'un revêtement de décoration sur une surface en composé minéral pouvant être de type céramique ou faïence, **caractérisé en ce qu'**il comprend au moins les étapes suivantes :
- le dépôt d'une couche de primaire d'adhérence sur ladite surface en composé minéral ;
- le dépôt d'une couche de béton ;
- le durcissement de ladite couche de béton ;
- le dépôt d'une couche de décoration.

2. Procédé de réalisation d'un revêtement de décoration selon la revendication 1, **caractérisé en ce qu'**il comprend en outre une étape de réalisation de motifs dans la couche de béton.

3. Procédé de réalisation d'un revêtement de décoration selon la revendication 2, **caractérisé en ce qu'**il comprend l'application d'un moule permettant de réaliser lesdits motifs, avant l'étape de durcissement de ladite couche de béton.

4. Procédé de réalisation d'un revêtement de décoration selon la revendication 3, **caractérisé en ce qu'**il comprend en outre l'application d'un agent démoulant sur la couche de béton avant durcissement, ledit agent pouvant être à base de sable.

5. Procédé de réalisation d'un revêtement de décoration selon l'une des revendications 3 ou 4, **caractérisé en ce que** lesdits motifs sont réalisés par application locale successive d'un moule, déplacé de proche en proche sur la totalité de la surface à traiter.

6. Procédé de réalisation d'un revêtement de décoration selon la revendication 1, **caractérisé en ce que** le béton est un béton auto-nivelant.

7. Procédé de réalisation d'un revêtement de décoration selon l'une des revendications précédentes, **caractérisé en ce qu'**il comprend en outre le dépôt d'une couche supérieure de résine de protection.

8. Procédé de réalisation d'un revêtement de décoration selon l'une des revendications précédentes, **caractérisé en ce que** le dépôt de la couche de primaire d'adhérence est effectué avec un rouleau à peindre.

9. Procédé de réalisation d'un revêtement de décoration selon l'une des revendications précédentes, **caractérisé en ce que** le dépôt de la couche de béton est réalisé avec un rouleau calandreur permettant de calibrer l'épaisseur de la couche de béton.

10. Procédé de réalisation d'un revêtement de décoration selon l'une des revendications précédentes, **caractérisé en ce que** le dépôt de la couche comprenant de la chaux éteinte et des agrégats de composé de type marbre ou granite est effectué avec un rouleau.

11. Procédé de réalisation d'un revêtement de décoration selon l'une des revendications précédentes, **caractérisé en ce que** le béton comprend un composé minéral de type granite, et au moins une résine synthétique minérale déshydratée.

12. Procédé de réalisation d'un revêtement de décoration selon l'une des revendications précédentes, **caractérisé en ce que** la couche de décoration comprend une couche comprenant de la chaux éteinte et des agrégats de composé minéral pouvant être de type marbre ou granite.

13. Procédé de réalisation d'un revêtement de décoration selon l'une des revendications précédentes, **caractérisé en ce que** la couche comprenant de la chaux éteinte et du marbre, comprend en outre des terres ou oxydes naturelles en poudre pour la mise en teinte.

14. Procédé de réalisation d'un revêtement de décoration selon l'une des revendications précédentes, **caractérisé en ce que** la couche de décoration comprend une peinture bi-composant comportant au moins un premier composant de type prépolymère à base de bisphénol et d'épichlorhydrine et au moins un second composant de type polyamine

15. Procédé de réalisation d'un revêtement de décoration selon l'une des revendications précédentes, **caractérisé en ce que** la couche de décoration est une couche de peinture dite de patine comprenant une résine et de la chaux éteinte permettant d'obtenir des effets de couleurs vieillies.

16. Procédé de réalisation d'un revêtement de décoration selon l'une des revendications précédentes, **caractérisé en ce qu'**il comprend en outre le dépôt d'une couche intermédiaire dite d'imprégnateur à la surface de la couche comprenant de la chaux éteinte et du marbre de manière à figer la matière minérale, ladite couche d'imprégnateur étant à base de résine et de silicate.

17. Procédé de réalisation d'un revêtement de décoration selon la revendication 7, **caractérisé en ce que** la résine de protection est une résine microporeuse pouvant être de type polyuréthane.

18. Procédé de réalisation d'un revêtement de décoration selon la revendication 7, **caractérisé en ce que** la résine de protection est une résine bi-composant comportant au moins un premier composant de type prépolymère à base de bisphénol et d'épichlorhydrine et au moins un second composant de type polyamine.

19. Procédé de réalisation d'un revêtement de décoration selon l'une des revendications précédentes, **caractérisé en ce que** la couche de primaire d'adhérence est de type résine acrylique.
